# EUROPEAN PATENT SPECIFICATION

(11) **EP 2 118 546 B1**
(45) Date of publication and mention of the grant of the patent: **11.12.2013**
(21) Application number: 08712714.8
(22) Date of filing: 15.02.2008
(51) Int. Cl.: H02G 3/04, H02G 3/00

(54) **BRACKET FOR CABLE LADDER AND METHOD FOR THE MANUFACTURE THEREOF**
HALTER FÜR KABELLEITER UND HERSTELLUNGSVERFAHREN DAFÜR
COLLIER POUR ÉCHELLE À CÂBLES ET PROCÉDÉ DE FABRICATION

(30) Priority: 14.03.2007 SE 0700631
(43) Date of publication of application: 18.11.2009
(73) Proprietor: AB WIBE, 792 27 Mora (SE)
(72) Inventor: ÖJERSTAV, Jan, S-792 34 Mora (SE)
(74) Representative: Axelsson, Nils Ake A.L.
(86) International application number: PCT/SE2008/000122
(87) International publication number: WO 2008/111887

(56) References cited:
- EP-A1- 0 813 280
- EP-A1- 0 849 853
- DE-U1- 7 618 934
- FR-A1- 2 836 979
- US-A- 4 804 159

## Description

### FIELD OF THE INVENTION

The invention concerns a bracket according to preamble of claim 1 and a method for the production thereof according to claim 9.

For cable drawing in buildings, cable ladders are used which usually are comprised of constructions having U-shaped cross-sections formed by longitudinally extending spaced thread elements which are interconnected with U-shaped transversal elements. For fastening of the cable ladders on the walls and other structural elements, brackets are used which extend from a fastening portion which is intended to be attached to the wall, to a support portion. The support portion usually exhibits an upper contact surface for the cooperation with the underside of the cable ladder, when a cable ladder is positioned horizontally.

Previously known brackets are complicated to manufacture and a previously known bracket includes a fastening portion made from an L-shaped profile of a relatively thick metal plate, which is welded together with a longitudinal support portion which is inverted L-shaped in section. On the upper, essentially horizontal part of the support portion, there are bores for tie wire or the like for the attachment of the cable ladder to the bracket.

A known bracket functions well but is relatively complex and thereby expensive in manufacture.

### AIM AND MOST IMPORTANT FEATURES OF THE INVENTION

It is an aim of the present invention to provide a bracket as well as a method for the production thereof, wherein said drawback of the previously known bracket is mitigated and in particular such that more rational production can be provided with maintained good function and security.

These aims are achieved with a bracket as mentioned initially through the features of the characterizing portion of claim 1.

By the bracket being possible to manufacture in one piece with maintaining the desired properties of the portions of the bracket, the need for using several types of plate metal in the manufacture is avoided and it is achieved that fitting operations, fulfilling tolerances etc for assembling different elements can be avoided.

By the integral fastening portion and joining portions, which are arranged to be adjoining to the web portion, a very rigid construction is obtained which exhibits rigidity in the general loading direction because of the carried load, i.e. usually vertically in the main plane of the web portion, as well as in other directions forming angles thereto. In this later case, it is in particular a question of load forces perpendicular to the main plane through the web portion.

The closed triangular shape will comprise the cross-sectional shape of a "pipe construction" which ensures the very rigid construction.

By the web portion having at least one rigidifying indentation, very good rigidity of this part of the bracket is achieved. In general it could be mentioned that the number of rigidifying indentations in the web portion depends on the size of the bracket, and in particular the length of the support portion, that is basically how wide the equipment details, usually cable ladders, to be supported are.

It is preferred that said rigidifying indentation is bowl-shaped and thus has a closed configuration, since this gives particularly good rigidity to the construction, and that the number of bowl-shaped indentations are from one and up, usually from one to four. As an example it could be mentioned that it has been shown suitable that the surface of said indentation is about 40 to 60% of the surface of the web portion.

Further rigidity can be achieved if a rigidifying rib is arranged at an edge of the web portion opposite to the edge adjoining to the contact portion. Hereby is achieved, as seen in general in a cross-section, a shallow U-shaped configuration of the support portion, which gives excellent rigidity for the construction.

In a method according to the invention, the corresponding advantages are obtained and further features and advantages are defined by the dependent claims.

### BRIEF DESCRIPTION OF THE DRAWINGS

The invention will now be described by way of embodiments and with reference to the annexed drawings, wherein:
Figs. 1a - 1d show different embodiments of brackets according to the invention in perspective views,
Fig. 2 shows the bracket in Fig. 1d in a plane view from above,
Fig. 3 shows a detail of the bracket of Fig. 2,
Fig. 4 shows a section through the fastening portion and adjoining elements of the bracket of Fig. 2,
Fig. 5 shows a transversal section of the support portion of the bracket in Fig. 2,
Fig. 6 shows a longitudinal section of a detail of the bracket in Fig. 2,
Fig. 7 shows a side view of the bracket in Fig. 1b,
Fig. 8 shows diagrammatically a method sequence, and
Figs. 9a and b show the bracket in Fig. 1c in connection with a cable ladder.

### DESCRIPTION OF EMBODIMENTS

Like reference numerals will be used below for like or similar elements in different embodiments.

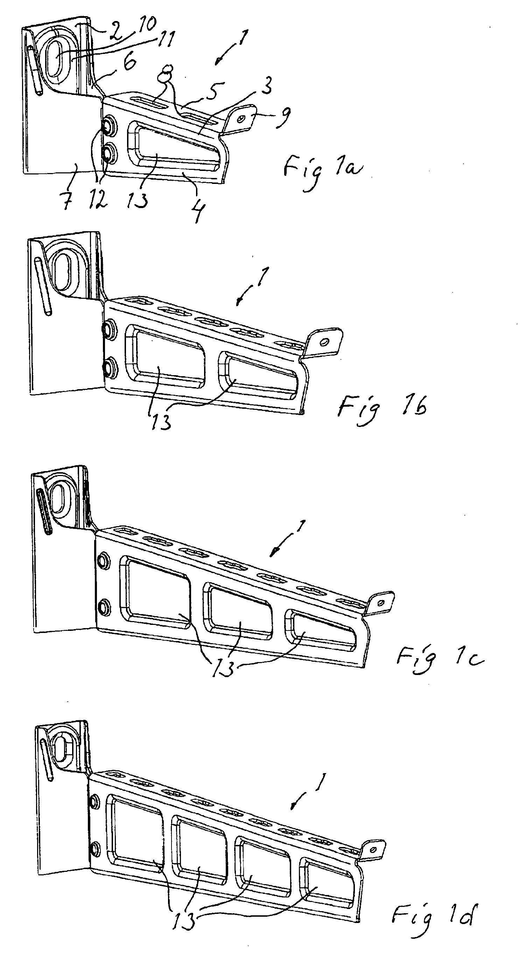

The bracket 1 in Fig. 1a provides a fastening portion 2, for the fastening against a structural element such as a wall or the like, and a support portion 3 for supporting an equipment detail such as usually a cable ladder. The support portion 3 includes a web portion 4 extending essentially in a vertical plane and forming essentially a right angle to the fastening portion 2. A contact portion 5 for receiving an equipment detail is comprised of a rib-shaped metal plate portion which is bent at the right angle in respect of said web portion 4.

The contact portion 5 is provided with a number of holes 8 for allowing fastening, in particular binding, of an equipment detail lying on the bracket, usually a (not shown) cable ladder. At its outer, free end, the contact portion 5 is provided with a support tab 9 for allowing positioning of an equipment detail before it has been fastened to the bracket without sliding off the bracket. The support tab 9 here also exhibits a grounding hole for the attachment of a grounding screw and a grounding cable in a per see known manner.

Between the fastening portion 2 and the support portion 3 there are arranged first and second joining portions 6 and 7 respectively, which together with the fastening portion 2 forms a closed triangular shape, as seen in a cross section, such that the three portions together form a pipe form.

The fastening portion 2 further provides an elongate fastening hole 10 for the co-operation with a fastening element such as a fastening screw. The fastening hole 1O is surrounded by a surrounding rigidifying ridge in order to rigidify the fastening portion 2 in the area of the fastening hole 10. The fastening hole is preferably positioned in a region of the fastening portion which is positioned above the contact portion in order to facilitate the application of a fastening element. Also other positions of fastening holes are possible.

12 indicate two fastenings in the form of "Tox rivets" or clinch rivets, which joint together the first, and the second joining portion and the inner end of the web portion with each other for forming said pipe form. A "Tox rivet" does not exhibit any external material such as a screw, external rivet or the like but is set directly into the two metal plate portions that are to be joined, such that a permanent joint is obtained solely by deformation of the plate metal details involved.

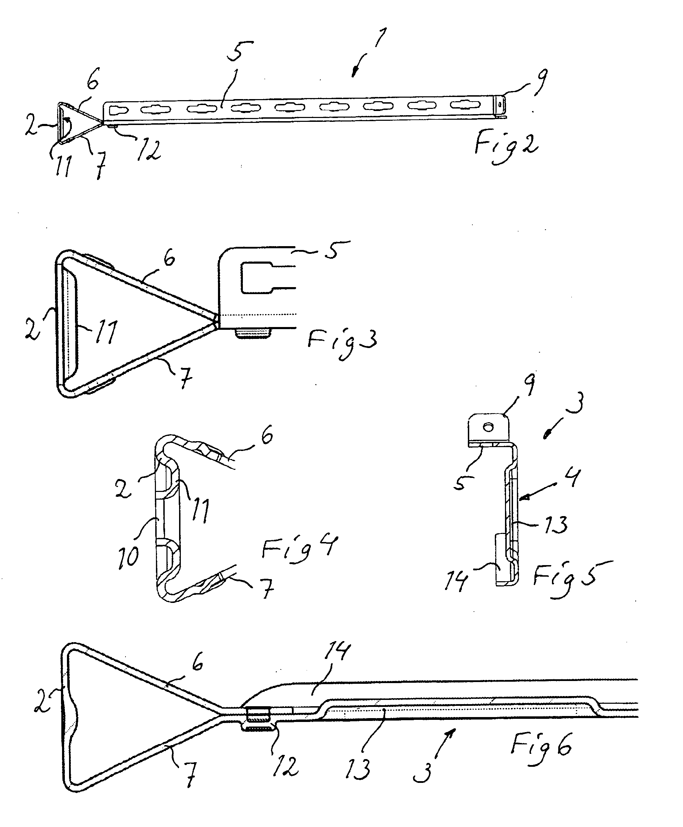

Further, the web portion 4 is provided with an indentation 13 of closed "bowl-shape", that is with a continuous unbroken surrounding edge, which contributes to an excellent rigidity of the support portion 3. Through this indentation 13 together with the contact portion 5 and a lower inward bend (shown in Figs. 5 and 6) the support portion 3 is a very rigid construction and is, altogether, given a predictable deformation of the bracket at overload, such that twisting sideways under load is avoided and instead the support portion 3 will move downwardly, essentially in a plane including the main plane of the web portion 4.

Figs. 1b - 1d show brackets of the same general basic construction as the bracket in Fig. 1a, but with increased length of the brackets with increasing degree. The dimensions have thus of course been altered for adaptation to expected load and increased leverage, but the most distinguishing difference is that the longer the support portion of the respective bracket, the more indentations 13 of "bowl-shape" the respective portion exhibits. As an example only, it can be mentioned that the surface of the indentations usually amounts to between 40 and 60% of the total surface of the web portion. Deviations from this can, however, exist.

The construction according to the invention allows, because of the many measures increasing rigidity, manufacture of the brackets in relatively thin plate metal material. For all embodiments in Figs. 1a - 1d and for normal expected load at normal cabling can be used a metal plate thickness of 1,5 mm, which is below the metal plate thickness in corresponding brackets according to the background art, where a corresponding support portion could be about 2 mm and the corresponding fastening portion 5 to 6 mm.

In Figs. 2 - 6 the bracket in Fig. 1d is shown in different angles and sections. In particular in Figs. 3 and 6 the construction is shown of the triangular structure being formed by the fastening portion 3 and the first and the second joining portions 6 and 7. By the isosceles construction in this case, by the first and second joining portions having the same length, the most preferable force reception and rigidity of the construction is obtained.

In Fig. 4 is shown a section through the fastening portion 2 at the level of the fastening hole 10, whereof is shown the positioning of the rigidifying ridge 11 in respect of said fastening hole 10. The fastening screw for the cooperation with the bracket is preferably provided with a washer having a size covering said rigidifying ridge for best force distribution.

Fig. 5 shows the construction of the support portion 3 with a rigidifying shallow extended shape and the "bowl-shaped" indention 13 and a rigidifying ridge 14, which extents along and is a bend at an edge of the web portion 4 which is opposite to the edge, along which the contact portion 5 extends.

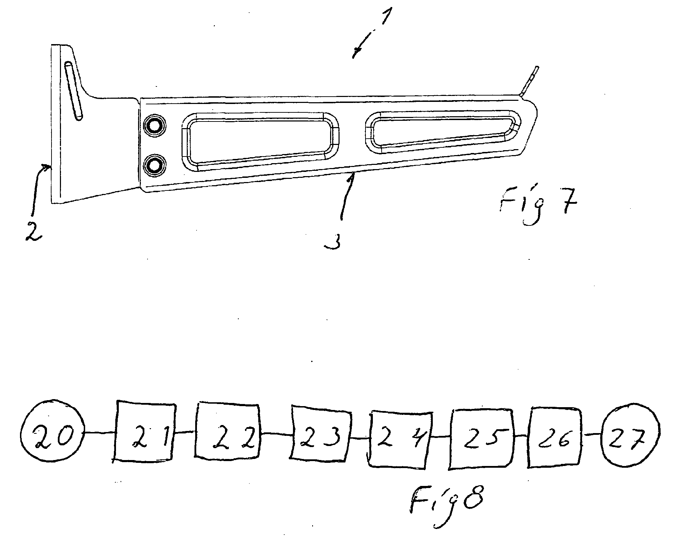

Fig. 7 shows the bracket in Fig. 1b in a side view, whereof the relations between the dimensions in different directions of the bracket is shown. In particular is evident the relation between pipe length and the greatest dimension cross wise of the pipe. It is preferred that the closed pipe with triangular shaped cross-section being formed by the fastening portion and the joining portions has a pipe length being about 75 - 150% of the greatest transversal dimension of the pipe.

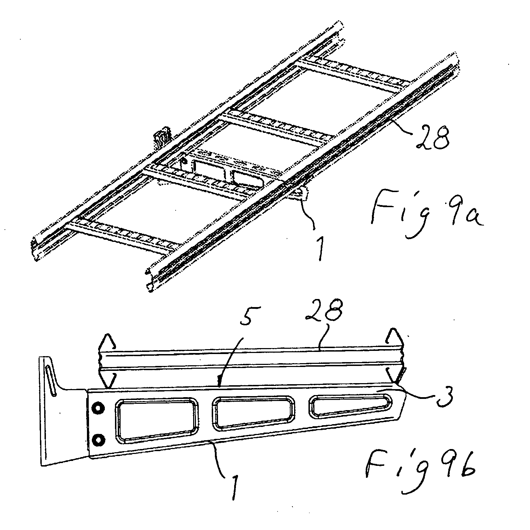

Figs. 9a and b show the bracket 1 in connection with a cable ladder 28 of a conventional type, wherein the cable ladder 28 is lying against the contact portion 5 of the support portion 3. Fixation of the cable ladder is in a per se known manner and therefore not described here.

A method for the manufacturing of a bracket according to the invention is described with reference to Fig. 8 for the most important method steps and is done according to the following:

In position 20 the sequence started by a blank such as a metal plate or a metal strip is fed into a tool,

In position 21 the blank is subjected to hole making in one or several steps,

In position 22 the overall shape is cut-out except for possible connecting strip for connecting to other blank parts,

In position 23 there are pressing of rigidifying portions such as indentation 13, rigidifying ridges, whereupon,

In position 24 bending of the contact portion and the rigidifying rib 14 are done,

In position 25, thereafter bending of the joining portions in respect of the web portion and a fastening portion 2 in different steps is made until the closed triangular "pipe form" is obtained,

In position 26, finally, the Tox riveting operation is undertaken in a particular part of the tool,

Position 27 indicates the end of the sequence.

The method steps can be undertaken in different tools and in partly reverse order; even if it is preferred that all operational steps are undertaken in one single tool and in different parts of this tool.

The invention can be modified within the scope of the following claims and the dimensions of the portions involved can thus be made different. The "Tox rivets" 12 can be replaced by other fastening elements, such as for example spot welds, conventional rivets or screws, even if this is not preferred since this would require further manufacturing steps.

Preferably a bracket according to the invention is manufactured in one single tool but where the different method steps are undertaken in different parts of the tool.

## Claims

1. Bracket (1) for support of an equipment detail in a building including a fastening portion (2) for fastening to a structural element such as a wall and, extending from the fastening portion a support portion (3) for receiving the equipment detail, wherein the bracket is made from plate metal and the support portion forms an essentially right angle to the fastening portion, **characterized in**
- **that** the bracket is made from one piece of metal plate,
- **that** the support portion includes a web portion (4) and a contact portion (5) which is oriented essentially at a right angle thereto,
- **that** the fastening portion is connected to said web portion over two joining portion (6,7), which extend from a neighbouring edge of the web portion in respect of the fastening portion to two side edges of the fastening portion such that the fastening portion (2) and the joining portions (6,7) form a closed triangular shape, as seen in a direction in parallel with a main plane through the web portion (4).

2. Bracket according to claim 1, **characterized in that** the web portion (4) is in use oriented essentially in a vertical plane.

3. Bracket according to claim 1 or 2,
**characterized in that** the web portion (4) provides at least one rigidifying indention (13).

4. Bracket according to claim 3, **characterized in that** each of said rigidifying indentions (13) is bowl-shaped.

5. Bracket according to any one of the previous claims,
**characterized in that** the support portion (3) at an edge of the web portion (4) opposite to the edge adjoining to the contact portion (5) provides a lengthwise extending bent rigidifying strip (14).

6. Bracket according to any one of the previous claims,
**characterized in that** said triangular shape is isosceles.

7. Bracket according to any one of the previous claims,
**characterized in that** the fastening portion (2) and the joining portions (6,7) form a closed pipe having triangular cross section with a pipe-length amounting to about 75 - 150% of the greatest cross-wise dimension of the pipe.

8. Bracket according to any one of the previous claims,
**characterized in that** the fastening portion (2) has a fastening hole (10) which is surrounded by a rigidifying ridge (11) and which is positioned at an area of the fastening portion being positioned above the contact portion (5).

9. Method for the manufacturing of a bracket (1) according to any one of the claims 1 - 8, wherein from metal plate material a support portion (3) and a fastening portion (2) are cut out, are provided with holes, are bent and are joined for forming the bracket, **characterized in**
- **that** the bracket is made in one piece of metal plate,
- **that** the support portion (3) is formed by a web portion (4) and a contact portion (5) being oriented essentially at the right angle thereto,
- **that** two joining portion (6,7) are formed which join the fastening portion (2) with said web portion (4), and which extend from a neighbouring edge of the web portion (4) in respect of the fastening portion (2) to two side edges of the fastening portion (2) such that the fastening portion (2) and the joining portion (6,7) form a closed triangular shape as seen in a direction in parallel with a main plane through the web portion (4).

10. Method according to claim 9, **characterized in that** the web portion (4) is provided with at least one rigidifying indentation (13).

11. Method according to claim 10, **characterized in that** each said rigidifying indentation (13) is made bowl-shaped.

12. Method according to any of the claims 9 - 11,
**characterized in that** the support portion (3) at an edge of the web portion (4) opposite to the edge adjoining to the contact portion (5) is provided with a lengthwise extending bent rigidifying rib (14).

## Patentansprüche

1. Halter (1) zur Abstützung eines Ausrüstungsdetails in einem Gebäude, der einen Befestigungsabschnitt (2) zur Befestigung an einem Bauelement, beispielsweise an einer Wand, und, ausgehend vom Befestigungsabschnitt, einen Stützabschnitt (3) zur Aufnahme des Ausrüstungsdetails beinhaltet, wobei der Halter aus Blech gefertigt ist und der Stützabschnitt einen im Wesentlichen rechten Winkel zum Befestigungsabschnitt bildet, **dadurch gekennzeichnet, dass**
- der Halter einteilig aus einem Blech gefertigt ist,
- der Stützabschnitt einen Stegabschnitt (4) und einen Kontaktabschnitt (5) beinhaltet, der im Wesentlichen in einem rechten Winkel dazu ausgerichtet ist,
- der Befestigungsabschnitt mit dem Stegabschnitt über zwei Verbindungsabschnitte (6, 7) verbunden ist, die sich von einer angrenzenden Kante des Stegabschnitts im Verhältnis zum Befestigungsabschnitt zu zwei Seitenkanten des Befestigungsabschnitts so erstrecken, dass der Befestigungsabschnitt (2) und die Verbindungsabschnitte (6, 7), in einer parallel zu einer Hauptebene durch den Stegabschnitt (4) gesehenen Richtung, eine geschlossene dreieckige Form bilden.

2. Halter nach Anspruch 1, **dadurch gekennzeichnet, dass** der Stegabschnitt (4) im Gebrauch im Wesentlichen in einer vertikalen Ebene ausgerichtet ist.

3. Halter nach Anspruch 1 oder 2, **dadurch gekennzeichnet, dass** der Stegabschnitt (4) mindestens einen verstärkenden Einzug (13) bereitstellt.

4. Halter nach Anspruch 3, **dadurch gekennzeichnet, dass** jeder der verstärkenden Einzüge (13) muldenförmig ausgebildet ist.

5. Halter nach einem der vorstehend aufgeführten Ansprüche, **dadurch gekennzeichnet, dass** der Stützabschnitt (3) an einer Kante des Stegabschnitts (4) gegenüber der an den Kontaktabschnitt (5) angrenzenden Kante mit einer gebogenen Verstärkungsrippe (14) versehen ist, die sich in Längsrichtung erstreckt.

6. Halter nach einem der vorstehend aufgeführten Ansprüche, **dadurch gekennzeichnet, dass** die dreieckige Form gleichschenklig ist.

7. Halter nach einem der vorstehend aufgeführten Ansprüche, **dadurch gekennzeichnet, dass** der Befestigungsabschnitt (2) und die Verbindungsabschnitte (6, 7) ein geschlossenes Rohr mit einem dreieckigen Querschnitt und mit einer Rohrlänge bilden, die in etwa 75 - 150% der größten Querabmessung des Rohrs beträgt.

8. Halter nach einem der vorstehend aufgeführten Ansprüche, **dadurch gekennzeichnet, dass** der Befestigungsabschnitt (2) ein Befestigungsloch (10) hat, das von einer Verstärkungsleiste (11) umgeben und an einem Bereich des Befestigungsabschnitts positioniert ist, der oberhalb des Kontaktbereichs (5) positioniert ist.

9. Verfahren zur Herstellung eines Halters (1) nach einem der Ansprüche 1 bis 8, bei der aus Blechmaterial ein Stützabschnitt (3) und ein Befestigungsabschnitt (2) ausgeschnitten, mit Löchern versehen, gebogen und miteinander verbunden werden, um den Halter zu bilden, **dadurch gekennzeichnet, dass**
- der Halter einteilig aus einem Blech gefertigt wird,
- der Stützabschnitt (3) durch einen Stegabschnitt (4) und einen Kontaktabschnitt (5) gebildet wird, der im Wesentlichen im rechten Winkel dazu ausgerichtet ist,
- zwei Verbindungsabschnitte (6, 7) gebildet werden, die den Befestigungsabschnitt (2) mit dem Stegabschnitt (4) verbinden, und die sich von einer angrenzenden Kante des Stegabschnitts (4) im Verhältnis zum Befestigungsabschnitt (2) zu zwei Seitenkanten des Befestigungsabschnitts (2) so erstrecken, dass der Befestigungsabschnitt (2) und die Verbindungsabschnitte (6, 7), in einer parallel zu einer Hauptebene durch den Stegabschnitt (4) gesehenen Richtung, eine geschlossene dreieckige Form bilden.

10. Verfahren nach Anspruch 9, **dadurch gekennzeichnet, dass** der Stegabschnitt (4) mit mindestens einem verstärkenden Einzug (13) versehen wird.

11. Verfahren nach Anspruch 10, **dadurch gekennzeichnet, dass** jeder verstärkende Einzug (13) muldenförmig ausgebildet wird.

12. Verfahren nach einem der Ansprüche 9 bis 11, **dadurch gekennzeichnet, dass** der Stützabschnitt (3) an einer Kante des Stegabschnitts (4) gegenüber der an den Kontaktabschnitt (5) angrenzenden Kante mit einer gebogenen Verstärkungsrippe (14) versehen wird, die sich in Längsrichtung erstreckt.

## Revendications

1. Console de fixation (1) pour supporter un composant d'équipement dans un bâtiment, comportant une partie de fixation (2) destinée à être fixée à un élément structurel tel qu'un mur, et, s'étendant depuis la partie de fixation, une partie de support (3) destinée à recevoir le composant d'équipement, la console de fixation étant fabriquée en tôle métallique et la partie de support formant essentiellement un angle droit avec la partie de fixation, **caractérisée en ce que**
- la console de fixation est fabriquée d'une seule pièce en tôle métallique,
- la partie de support comporte une partie de membrure (4) et une partie de contact (5) qui est orientée essentiellement à angle droit par rapport à la partie de membrure,
- la partie de fixation est connectée à ladite partie de membrure par le biais de deux parties de liaison (6, 7) qui s'étendent depuis un bord adjacent de la partie de membrure par rapport à la partie de fixation jusqu'à deux bords latéraux de la partie de fixation de telle sorte que la partie de fixation (2) et les parties de liaison (6, 7) constituent une forme triangulaire fermée, vue dans une direction parallèle à un plan principal passant par la partie de membrure (4).

2. Console de fixation selon la revendication 1, **caractérisée en ce que** la partie de membrure (4) est orientée pendant l'utilisation essentiellement dans un plan vertical.

3. Console de fixation selon la revendication 1 ou 2, **caractérisée en ce que** la partie de membrure (4) présente au moins un renfoncement de rigidification (13).

4. Console de fixation selon la revendication 3, **caractérisée en ce que** chacun desdits renfoncements de rigidification (13) a une forme en bol.

5. Console de fixation selon l'une quelconque des revendications précédentes, **caractérisée en ce que** la partie de support (3) présente, au niveau d'un bord de la partie de membrure (4) opposé au bord adjacent à la partie de contact (5), une bande de rigidification coudée s'étendant longitudinalement (14).

6. Console de fixation selon l'une quelconque des revendications précédentes, **caractérisée en ce que** ladite forme triangulaire est isocèle.

7. Console de fixation selon l'une quelconque des revendications précédentes, **caractérisée en ce que** la partie de fixation (2) et les parties de liaison (6, 7) forment un conduit fermé ayant une section transversale triangulaire avec une longueur de conduit représentant environ 75 - 150 % de la plus grande dimension transversale du conduit.

8. Console de fixation selon l'une quelconque des revendications précédentes, **caractérisée en ce que** la partie de fixation (2) présente un trou de fixation (10) qui est entouré par une arête de rigidification (11) et qui est positionné au niveau d'une zone de la partie de fixation située au-dessus de la partie de contact (5).

9. Procédé de fabrication d'une console de fixation (1) selon l'une quelconque des revendications 1 à 8, dans lequel on découpe, dans un matériau en tôle métallique, une partie de support (3) et une partie de fixation (2), on pratique des trous dans celles-ci, on les recourbe et on les relie afin de former la console de fixation, **caractérisé en ce que**
- la console de fixation est fabriquée d'une seule pièce en tôle métallique,
- la partie de support (3) est formée par une partie de membrure (4) et une partie de contact (5) qui est orientée essentiellement à angle droit par rapport à la partie de membrure,
- deux parties de liaison (6, 7) sont formées, lesquelles relient la partie de fixation (2) à ladite partie de membrure (4), et lesquelles s'étendent depuis un bord adjacent de la partie de membrure (4) par rapport à la partie de fixation (2) jusqu'à deux bords latéraux de la partie de fixation (2) de telle sorte que la partie de fixation (2) et les parties de liaison (6, 7) constituent une forme triangulaire fermée, vue dans une direction parallèle à un plan principal passant par la partie de membrure (4).

10. Procédé selon la revendication 9, **caractérisé en ce que** la partie de membrure (4) est pourvue d'au moins un renfoncement de rigidification (13).

11. Procédé selon la revendication 10, **caractérisé en ce que** chacun desdits renfoncements de rigidification (13) a une forme en bol.

12. Procédé selon l'une quelconque des revendications 9 à 11, **caractérisé en ce que** la partie de support (3) présente, au niveau d'un bord de la partie de membrure (4) opposé au bord adjacent à la partie de contact (5), une bande de rigidification coudée s'étendant longitudinalement (14).
